# FASCICULE DE BREVET EUROPEEN

(11) **EP 2 200 835 B1**
(45) Date de publication et mention de la délivrance du brevet: **09.07.2014**
(21) Numéro de dépôt: 08870829.2
(22) Date de dépôt: 15.09.2008
(51) Int. Cl.: G06K 1/12, G06K 5/02

(54) **PROCEDE ET DISPOSITIF DE MARQUAGE D'UNE SURFACE PAR NANOSTRUCTURES PERIODIQUES CONTROLEES**
VERFAHREN UND VORRICHTUNG ZUR MARKIERUNG EINER OBERFLÄCHE MIT HILFE GESTEUERTER PERIODISCHER NANOSTRUKTUREN
METHOD AND DEVICE FOR MARKING A SURFACE USING CONTROLLED PERIODIC NANOSTRUCTURES

(30) Priorité: 13.09.2007 FR 0706427
(43) Date de publication de la demande: 30.06.2010
(73) Titulaire: Advanced Track & Trace, 92500 Rueil-Malmaison Cedex (FR)
(72) Inventeur: AUDOUARD, Eric, F-42000 Saint Etienne (FR); FOUCOU Alain, F-92500 Rueil-Malmaison Cedex (FR); MASSICOT Jean-Pierre, F-92500 Rueil-Malmaison Cedex (FR); SAGAN Zbigniew, F-92500 Rueil-Malmaison Cedex (FR); DUSSER Benjamin, F-42000 Saint Etienne (FR); JOURLIN Michel, F-42000 Saint Etienne (FR); SODER Hervé, F-42000 Saint Etienne (FR)
(74) Mandataire: Lotaut, Yacine Diaw
(86) Numéro de dépôt international: PCT/FR2008/001292
(87) Numéro de publication internationale: WO 2009/090324

(56) Documents cités:
- EP-A- 1 586 405
- EP-A- 1 788 115
- WO-A-2007/012215
- JP-A- 2005 270 992
- M. GUILLERMIN ET AL.: APPLIED SURFACE SCIENCE, vol. 253, 25 février 2007 (2007-02-25), pages 8075-8079, XP002479757 cité dans la demande
- YASUHIKO SHIMOTSUMA ET AL.: PROC. OF SPIE, vol. 5662, 2004, pages 173-178, XP002479758

## Description

La présente invention concerne un procédé et un dispositif de marquage d'une surface par nanostructures périodiques contrôlées. Elle s'applique, en particulier au marquage d'un objet ou d'un document en vue de son identification, de sa traçabilité et de son authentification.

On connaît de nombreux moyens de marquage, par exemple par impression ou par modification d'un état de surface. Ces moyens de marquage sont très adaptés aux marquages en série mais offre une faible sécurité en matière d'identification ou d'authentification de l'objet ou du document marqué. En particulier, leur reproduction par un contrefacteur est généralement aisée.

De plus, les marquages de l'art antérieur sont généralement visibles, ce qui facilite leur détection, leur analyse ou leur destruction par un contrefacteur.

La mise en évidence de l'existence de structures périodiques, ayant une période de quelques centaines de nanomètres a été effectuée scientifiquement (voir, par exemple le document de MM. GUILLERMIN, F. GARRELIE, N. SANNER, E. AUDOUARD, H. SODER "Mono- and multi-pulse formation of surface structures under static femtosecond irradiation" Accepté à Appl. Surf. Sc.253, 8075-879 - 2007).

Le document WO 2007/01215 décrit la réalisation d'une structure de surface d'un matériau ou d'un outil d'estampage pour faire apparaître un effet holographique sur cette surface. Il met en oeuvre des structures auto-adaptatives impliquant un marquage par trait continu présentant, sur toute la longueur du trait, des structures parallèles. De plus, il requiert des dizaines, voire des centaines de tirs en chaque point du trait à marquer. En conséquence de ces deux caractéristiques, ce procédé de marquage est très lent et ne permet pas d'inscrire d'autres informations que les symboles tracés avec les traits.

Le document EP 1 586 405 décrit un micro-usinage en formant des structures par tir laser. Cet usinage vise, par exemple, à améliorer l'interface mécanique entre deux pièces. Il ne permet donc nullement de lutter contre la contrefaçon.

Le document JP 2005-270992 décrit un procédé de marquage d'une surface, qui ne permet pas, non plus, de lutter contre la contrefaçon.

La présente invention vise à remédier à ces inconvénients.

A cet effet, selon un premier aspect, la présente invention vise un procédé de marquage d'une surface, caractérisé en ce qu'il comporte :
- une étape de codage d'une information sous forme d'une image comportant des valeurs représentatives de l'information codée,
- une étape de marquage, point par point, d'une zone de ladite surface avec un faisceau laser polarisé pour former des nanostructures orientées sur ou dans ladite surface, en modulant la polarisation du faisceau laser pour chaque point de marquage en fonction de la valeur d'un point de ladite image,
- une étape de détermination d'une signature représentative de caractéristiques physiques de points de l'image marquée et
- une étape de mémorisation de ladite signature.

Ainsi, la présente invention met en oeuvre des nanostructures discrètes pour le codage d'information en utilisant l'orientation de ces nanostructures. On observe que la présente invention s'applique au marquage de tous types de matériaux, en provoquant une structuration de surface par orientation de nanostructures pour enregistrer, point par point, de l'information dans le marquage, ladite orientation ayant un effet sur la lumière et permettant donc une lecture de l'image. La mise en oeuvre de la présente invention permet donc, à la fois, un marquage très rapide et une forte densité d'information sur la zone marquée de la surface.

L'information représentée par ladite image est, préférentiellement, une information adaptée à l'identification, l'authentification et/ou la traçabilité de la surface marquée.

Par exemple, ladite caractéristique physique est une position d'irrégularité de structure, une focalisation de faisceau laser, une puissance de faisceau laser, un nombre de tirs, un angle d'incidence ou un angle de polarisation. Ainsi, on peut, ultérieurement identifier la surface marquée à partir de sa signature. Et, si une surface authentique a servi à réaliser des copies, au moins pour la première génération de copies, la détermination de la surface authentique qui a servi sera probable. On augmente ainsi les moyens de lutte contre la contrefaçon que fournit la présente invention.

Selon des caractéristiques particulières, au cours de l'étape de marquage, on marque une zone de référence représentative d'une orientation à mettre en oeuvre au cours d'une étape de lecture dudit marquage. Grâce à ces dispositions, lors de la lecture du code, on peut orienter précisément l'éclairage et augmenter la lisibilité du code.

Selon des caractéristiques particulières, au cours de l'étape de marquage, au moins la moitié de la surface de la zone marquée ne reçoit qu'un seul tir laser. Grâce à ces dispositions, la vitesse de marquage est augmentée.

Selon des caractéristiques particulières, au cours de l'étape de codage d'une information sous forme d'une image comportant des valeurs représentatives de l'information codée, chaque point de ladite image peut prendre au moins trois valeurs différentes et, au cours de l'étape de marquage, on module la polarisation du faisceau laser selon au moins trois directions, chaque direction de polarisation étant associée à l'une des valeurs de points de ladite image. Ainsi, on forme une zone marquée qui, une fois éclairée avec une orientation d'éclairage appropriée est multicolore et porte une forte densité d'information.

Selon des caractéristiques particulières, au cours de l'étape de marquage, on met en oeuvre un laser à impulsions d'une durée inférieure à 10x10⁻¹² seconde.

Selon des caractéristiques particulières, le procédé tel que succinctement exposé ci-dessus, comporte une étape de lecture de ladite image marquée sur ladite surface et une étape de vérification de qualité en fonction de l'image lue. La qualité de marquage est ainsi garantie.

Selon des caractéristiques particulières, au cours de l'étape de marquage, on met en oeuvre un faisceau laser de dimension inférieure à 25 µm.

Selon des caractéristiques particulières, au cours de l'étape de marquage, on réalise des points espacés de moins de 10 µm.

Selon des caractéristiques particulières, au cours de l'étape de marquage, on met en oeuvre un faisceau laser émettant une lumière dont la longueur d'onde est proche de 800 nm.

Selon des caractéristiques particulières, au cours de l'étape de codage, on fait varier ladite image pour chacune des étapes de marquage à réaliser. Grâce à ces dispositions, par simple lecture du code représenté par le marquage, on peut identifier la surface portant la marque et donc le produit qui la porte.

Selon des caractéristiques particulières, au cours de l'étape de codage, ladite information est représentative de données relatives à un objet ou document comportant ladite surface. Grâce à ces dispositions, la lecture directe d'au moins une partie du code représenté par le marquage fournit une identification de l'objet, à l'instar d'un code à barres.

Selon un deuxième aspect, la présente invention vise un dispositif de marquage d'une surface, caractérisé en ce qu'il comporte :
- un moyen de codage d'une information sous forme d'une image et
- un moyen de marquage de ladite surface avec un faisceau laser polarisé pour former des nanostructures orientées sur ou dans ladite surface, en modulant la polarisation du faisceau laser en fonction de chaque point de ladite image à former sur ladite surface, voir la revendication indépendante 14.

Les avantages, buts et caractéristiques de ce dispositif de marquage, étant similaires à ceux du procédé de marquage, tel que succinctement exposé ci-dessus, ils ne sont pas rappelés ici.

D'autres avantages, buts et caractéristiques de la présente invention ressortiront de la description qui va suivre, faite, dans un but explicatif et nullement limitatif en regard des dessins annexés, dans lesquels :
- la figure 1 représente, schématiquement, un mode de réalisation particulier du dispositif de marquage objet de la présente invention, et de ses conditions de fonctionnement,
- la figure 2 est une illustration de l'orientation de nanostructures en fonction de l'orientation de la polarisation de la lumière, orientation portée en degrés d'angle, sur la figure 2,
- la figure 3 représente, schématiquement, un mode de réalisation particulier du dispositif de lecture objet de la présente invention,
- la figure 4 représente, schématiquement, des couleurs lues sur une matrice de zones, en fonction d'une orientation d'éclairage,
- les figures 5A et 5B représentent, sous forme d'un logigramme, des étapes mises en oeuvre dans un mode de réalisation particulier du procédé de marquage et du procédé de lecture objets de la présente invention,
- la figure 6 représente deux exemples de répartitions de couleurs réalisées avec le même dispositif de marquage et le même dispositif de lecture en fonction de paramètres de marquage différents et
- la figure 7 représente une évolution de teinte de couleur obtenue lors d'une lecture de marque en fonction de l'orientation de nanostructures.

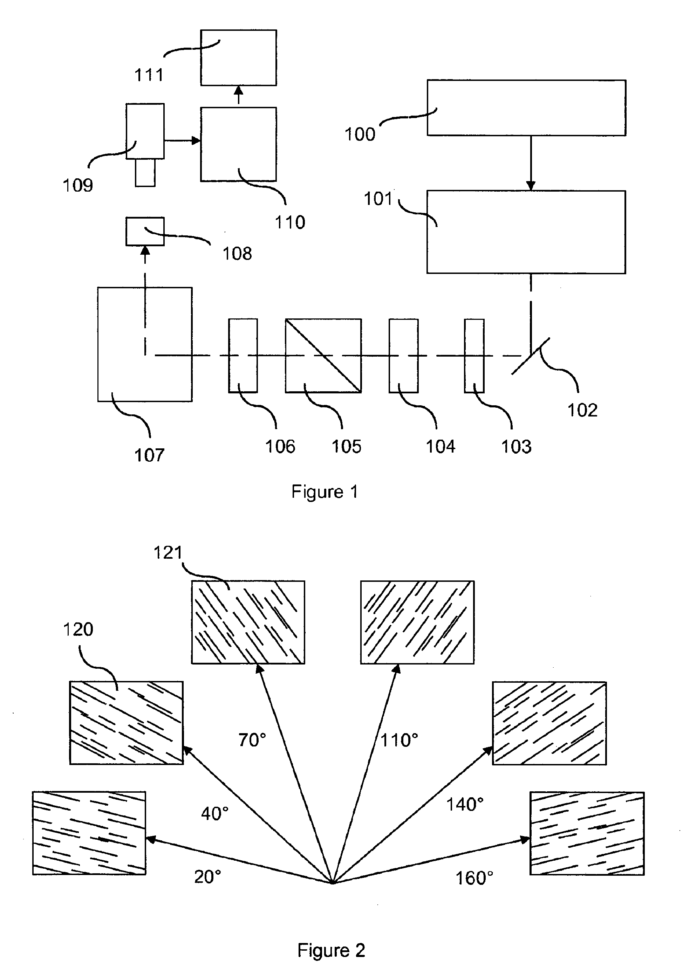

On observe, en figure 1, un moyen de commande 100, un laser 101, un miroir 102, un diaphragme 103, un polariseur 104, un cube séparateur 105, un polariseur 106, un scanner 107 et une surface à marquer 108.

Le moyen de commande 100 du laser 101 est adapté à déterminer une image à marquer sur la surface 108, image formée d'un tableau de zones portant, chacune, une information codée. Les zones peuvent être de formes identiques ou différentes. Dans la suite de la description, et dans les figures, on considère que toutes les zones du tableau sont des carrés de mêmes dimensions. Le tableau représenté par l'image à marquer forme ainsi une matrice de zones.

L'information portée par chaque zone peut être binaire ou non. Comme décrit plus loin, au moins une (ici chaque) valeur d'information portée par une zone correspond à une orientation de polarisation spécifique, une autre valeur pouvant correspondre à une absence de marquage, une absence de polarisation ou une polarisation d'orientation différente.

Dans des modes de réalisation, le moyen de commande 100 reçoit une information codée, de la part d'un système informatique. Dans d'autres modes de réalisation, le moyen de commande 100 reçoit de l'information à coder dans l'image et calcule l'image après codage de l'information.

Par exemple, au cours du codage, l'information codée est représentative de données relatives à un objet ou document comportant la surface à marquer. Par exemple, l'information codée représente une référence de produit, un numéro de série et/ou de lot, une date de fabrication, une référence de fabricant, une identification d'un propriétaire de droits de propriété intellectuelle sur le produit, une référence de destination de produit.

Dans des modes de réalisation, les valeurs des informations portées par les zones représentent des informations de sécurisation de la surface, par exemple des informations chiffrées.

Préférentiellement, chaque point de ladite image peut prendre au moins trois valeurs différentes qui correspondront respectivement, lors du marquage, à au moins trois valeurs d'angles de polarisation du faisceau laser.

Dans des modes de réalisation, pour chaque surface ou objet à marquer, le moyen de commande 100 fait varier l'image de manière à ce que chaque marquage corresponde à une image spécifique.

Le moyen de commande 100 commande l'orientation de polarisation du polariseur 106 selon un balayage de l'image, par exemple ligne par ligne et, dans chaque ligne, colonne par colonne.

Dans des modes de réalisation, le moyen de commande 100 commande aussi la focalisation de faisceau laser, la puissance de faisceau laser, le nombre de tirs et/ou l'angle d'incidence point par point en le faisant varier d'un point à un autre en fonction de l'image codée.

Le laser 101 est, dans des modes de réalisation, une source laser émettant des impulsions d'une durée de l'ordre de la centaine de femtoseconde (100x10⁻¹⁵ seconde) et, préférentiellement, inférieure à cette durée.

Le miroir 102 effectue, ici, un simple renvoi d'angle. Il sert à augmenter la compacité du dispositif objet de la présente invention.

Le diaphragme 103 est positionné dans le plan image du système optique et définit ainsi la dimension de chaque zone marquée pendant un tir.

Le polariseur 104 et le cube séparateur 105 réalisent conjointement un atténuateur servant à adapter la puissance du faisceau laser sur la surface à marquer 108. On note que d'autres moyens d'atténuation, de type connu, peuvent remplacer les éléments 104 et 105 pour réaliser cette fonction d'atténuation.

Le polariseur 106 est adapté à polariser la lumière qui atteint la surface à marquer 108, par polarisation de la lumière en provenance du cube séparateur 105, l'angle de polarisation dépendant de la valeur d'un signal représentant l'image codant une information, signal émis par le moyen de commande 100. Par exemple, le polariseur 106 est un polariseur à cristaux liquides ferroélectriques ou à céramiques PLZT ou un polariseur statique mis en rotation par un moteur électrique (non représenté).

Le scanner 107 est adapté à provoquer le balayage de la surface 108 de manière synchronisée avec le balayage de l'image fournie par le moyen de commande 100. On réalise ainsi un balayage synchronisé, d'une part, de chaque ligne de l'image fournie par le moyen de commande 100 et, d'autre part, de lignes parallèles sur la surface à marquer 108. Par exemple, le scanner 107 est muni de miroirs montés sur des céramiques piézoélectriques.

La surface à marquer 108 est, par exemple, en métal, en silicium, en papier, en matières plastiques ou en carton. On note que, en général, tout matériau peut ainsi être marqué mais que les puissances mises en jeu sont différentes. Par exemple, elles sont supérieures pour marquer des matériaux métalliques que pour marquer des matériaux diélectriques.

On observe aussi, en figure 1, un moyen de capture d'image 109, un moyen de traitement d'image 110 et un moyen de mémorisation 111.

Le moyen de capture d'image 109 comporte une source de lumière orientée, comme exposé plus loin, et un capteur d'image, par exemple une caméra ou un appareil photo électroniques.

Le moyen de traitement d'image 110 est adapté à déterminer, d'une part, la qualité du marquage, et, d'autre part, des caractéristiques physiques de l'image marquée sur la surface 108, en fonction de l'image électronique fournie par le moyen de capture d'image 109. Préférentiellement, ces caractéristiques physiques représentent des phénomènes irréguliers, imprévisibles ou aléatoires, comme, par exemple, les positions des bifurcations de lignes.

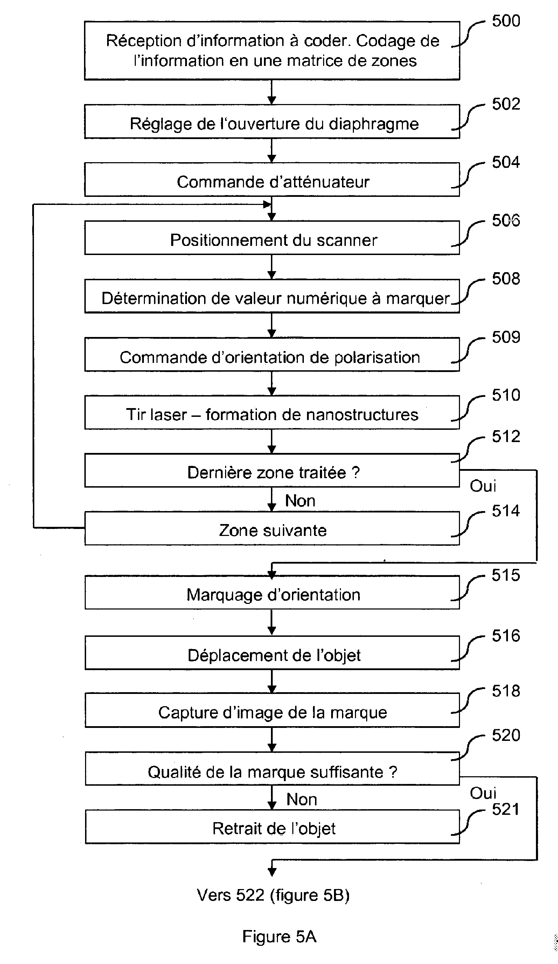

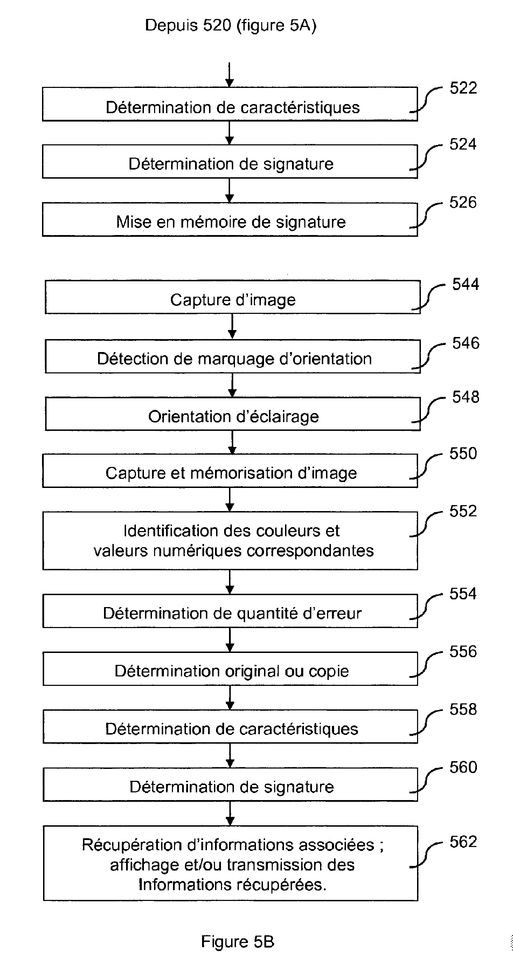

A partir de ces caractéristiques physiques, le moyen de traitement d'image 110 détermine une signature de l'image. Le fonctionnement du moyen de traitement d'image 110 est détaillé en regard des figures 5A et 5B.

En effet, la structure des nanostructures formées par irradiation laser ultra brèves n'est pas seulement caractérisée par une périodicité de l'ordre de quelques centaines de nanomètres. Des caractéristiques plus fines, ou irrégularités, telles que le nombre de bifurcations entres lignes des nanostructures pseudo-périodiques, la longueur moyenne des lignes entre deux bifurcations, les formes des figures de bifurcation, sont également analysées et quantifiées par des algorithmes d'analyse d'image adaptés. D'une figure de nanostructure peut alors être obtenue une signature numérique unique d'une interaction particulière entre le laser et le matériau (à la manière d'une empreinte digitale pour un être humain). Cette caractéristique propre est mémorisée pour être mise à profit dans des procédures d'identification, d'authentification et de traçabilité.

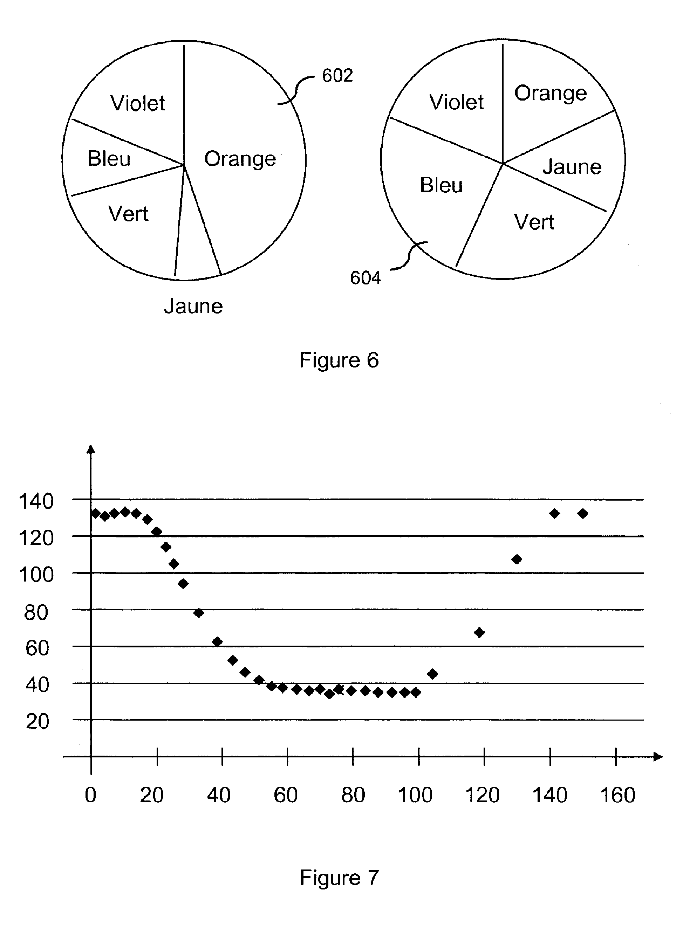

Dans d'autres modes de réalisation, la signature est représentative de caractéristiques physiques de points de l'image marquée correspondant à un tir ou une succession de tirs ponctuels. Par exemple, cette caractéristique physique est une focalisation de faisceau laser, une puissance de faisceau laser, un nombre de tirs, un angle d'incidence ou un angle de polarisation. Pour déterminer cette caractéristique et, en conséquence, la signature de la surface marquée, on utilise, par exemple, les données de calibration de couleurs exposées plus loin (voir notamment la figure 6). Par exemple, la répartition des couleurs obtenues lors de la prise de vue est représentative du nombre de tirs de faisceau laser effectués sur les points considérés.

Le moyen de mémorisation 111 est adapté conserver la signature de l'image et de l'information associée, c'est-à-dire, par exemple, le contenu de l'information représentée par cette image, contenu fourni par le moyen de commande 100.

Dans un premier mode d'utilisation de la présente invention, on met en oeuvre le dispositif pour marquer un moule, toutes les pièces moulées avec ce moule reproduisant la nanostructure réalisée par le dispositif sur le moule. On note que cette fabrication en série permet, cependant, d'identifier individuellement les pièces moulées. A cet effet, on capture une image de la nanostructure et on détermine la position des erreurs aléatoires de moulage puis la répartition de ces erreurs aléatoires. Cette répartition est ensuite mémorisées, par exemple dans une base de données accessible à distance, par exemple par l'intermédiaire du réseau Internet en association avec un identifiant de la pièce (par exemple date de fabrication, lot ou numéro de série individuel). Lors de la reconnaissance ultérieure de la pièce que l'on souhaite identifier, on capture à nouveau une image de la nanostructure, on détermine la position et la répartition des erreurs de moulage et on compare cette répartition avec celles représentées en mémoire pour identifier la pièce par les autres données mémorisées en relation avec cette signature (par exemple numéro de série, date et lieu de fabrication, numéro de lot, destinataire, ordre de fabrication). On note que cette fonction d'identification est conjointe avec une fonction anti-copie, toute copie d'une pièce moulée ou du moule provoquant l'apparition d'erreurs de copie additionnelles qui sont repérées de la même manière que l'identité de la pièce, par exemple en fonction du nombre total des erreurs dans la marque.

Dans un deuxième mode d'utilisation du dispositif objet de la présente invention, chaque objet, ou document, est individuellement l'objet d'un marquage par le dispositif, l'image et la marque ainsi formée variant, indépendamment des erreurs de marquage, d'un objet à l'autre ou d'un lot à l'autre.

On observe, en figure 2 que, en fonction de l'angle de polarisation du faisceau laser, représenté sur des flèches menant à des images de nanostructures, l'orientation des nanostructures varie. Par exemple, les lignes les plus longues de la nanostructure 120, réalisée avec un angle de polarisation de 40° par rapport à l'horizontale, sont orientées à environ 40° et les lignes les plus longues de la nanostructure 121, réalisée avec un angle de polarisation de 70° par rapport à l'horizontale, sont orientées à environ 70°. Cependant, ces angles sont mesurés à partir de deux droites perpendiculaires. En effet, les lignes de la nanostructure 121 sont sensiblement perpendiculaires au plan de polarisation de la lumière issue du laser.

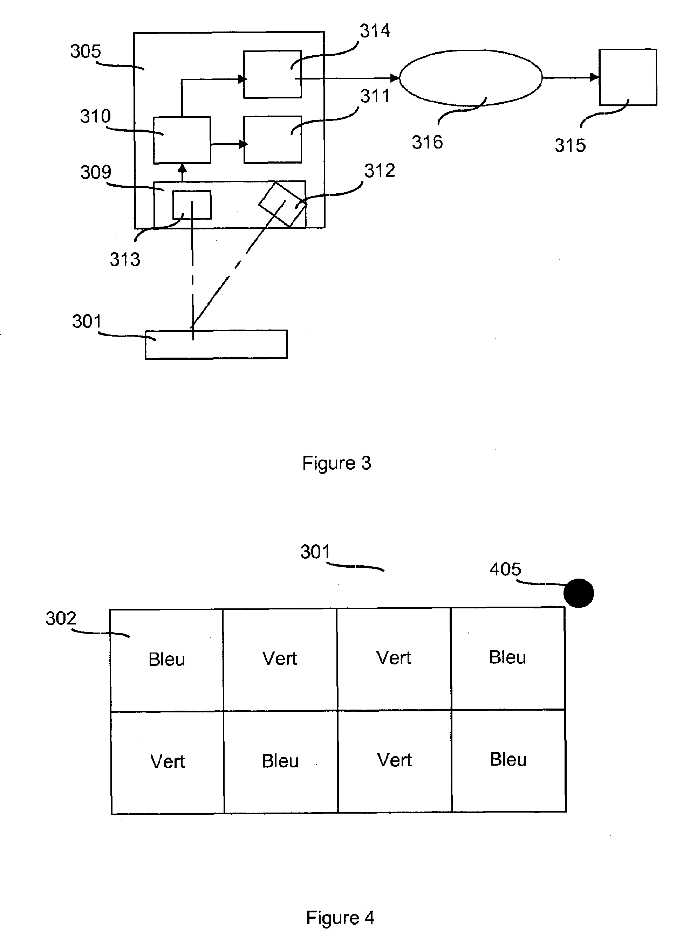

On observe, en figure 3, un dispositif de lecture d'information 305 comportant un moyen de capture d'image 309, un moyen de traitement d'image 310 et un moyen de mémorisation 311.

Le moyen de capture d'image 309 comporte une source de lumière orientée 312 et un capteur d'image 313, par exemple une caméra ou un appareil photo électronique.

Le moyen de traitement d'image 310 est adapté à déterminer :
- d'une part, la couleur correspondant à chaque point marqué de la zone marquée 302 observée (voir figure 4), selon des techniques de reconnaissance de zone marquée et de reconnaissance de couleur connues et,
- d'autre part, des caractéristiques physiques de l'image marquée sur la surface 301, en fonction de l'image électronique fournie par le moyen de capture d'image 309. A partir de ces caractéristiques physiques, le moyen de traitement d'image 310 détermine une signature de l'image similaire à celle mise en oeuvre lors du marquage de la surface considérée, comme détaillé en regard des figures 5A et 5B.

Puis, le moyen de traitement d'image 310 transmet cette signature à un serveur distant 315, par l'intermédiaire d'une interface de réseau 314 et d'un réseau de télécommunication 316, par exemple téléphonique ou Internet. Le serveur distant 315 compare cette signature au contenu d'une base de données de signatures. En retour, un identifiant de l'objet (par exemple date de fabrication, lot ou numéro de série individuel) est fourni par le serveur distant 315.

Conjointement, le moyen de traitement d'image 310 détermine, en fonction du taux d'erreurs dans la marque, si l'objet est un original ou une copie, une copie présentant un taux d'erreurs supérieur à une valeur limite (valeur limite éventuellement conservée en mémoire en association avec la signature de la marque ou représentée par l'information codée dans la marque réalisée).

On note ici que le terme d'erreurs peut s'appliquer à chacune des caractéristiques physiques mises en oeuvre pour la détermination de la signature ou à la lecture de l'information codée dans la marque lue. Pour le premier cas, on mesure une distance entre la signature lue et la signature mémorisée lors du marquage. Dans le deuxième cas, on met en oeuvre des redondances de l'information codée et on mesure le nombre ou le taux de redondances utilisées pour restaurer l'information codée. Par exemple, un type de redondances est connu sous le nom de « CRC » (acronyme de « check redundancy code » pour code de redondances de vérification). Dans chacun des deux cas, une valeur limite, ou seuil, est utilisée pour séparer les marques considérées comme authentiques et qui possèdent moins d'erreur, des marques considérées comme des copies.

Comme on l'observe en figure 4, sous un éclairage correctement orienté, des nanostructures donnent, par exemple, des couleurs bleues et vertes. En affectant, par exemple, une valeur binaire « 1 » à la couleur bleue et une valeur binaire « 0 » à la couleur verte, on associe l'octet 1 0 0 1 0 1 0 1 à l'image représentée en figure 4. La couleur observée dépend de l'angle d'observation et de l'angle d'éclairage. L'exploitation des couleurs observées requiert donc l'usage d'une analyse colorimétrique. Deux options peuvent être prises :
- un point de référence fixe 405 sur le ou à proximité du marquage est mis en place et permet d'orienter la lecture et, notamment l'angle d'incidence de la lumière éclairant la marque,
- une détermination précise et invariante de la distance colorimétrique entre deux marquages.

Comme on l'observe en regard des figures 5A et 5B, dans un mode de réalisation, la mise en oeuvre de la présente invention avec les dispositifs illustrés en figures 1 à 3 comporte, d'abord, une étape 500, de détermination, pour chaque objet ou document à marquer, d'une matrice de zones, chaque zone de la matrice étant associée à une valeur, par exemple binaire, représentant des informations codées et, éventuellement chiffrées. Les informations codées représentées par les valeurs associées aux zones de la matrice sont, par exemple, un identifiant de l'objet, une date de fabrication, un numéro de lot ou un numéro de série individuel.

Dans des modes de réalisation, au cours de l'étape 500, de codage d'une information sous forme d'une image comportant des valeurs représentatives de l'information codée, chaque point de ladite image peut prendre au moins trois valeurs différentes.

Puis, au cours d'une étape 502, on effectue un réglage, éventuellement automatique, de l'ouverture du diaphragme 103, positionné dans le plan image du système optique pour définir la dimension de la zone marquée pendant un tir. Cette dimension est, par exemple, fournie par une spécification conservée en mémoire pour un lot d'objets ou documents à marquer.

Puis, au cours d'une étape 504, on commande l'atténuation de la puissance lumineuse en commandant l'angle de polarisation du polariseur 104 situé en amont du cube séparateur 105. Cette atténuation peut être commandée automatiquement, par exemple en fonction d'une spécification conservée en mémoire et correspondant à un lot de documents ou d'objets ou en fonction de capteurs (non représentés) de couleur et de matière des documents ou objets à marquer.

Au cours d'une étape 506, on positionne le scanner 107 pour que la première zone de l'image à former sur l'objet ou document à marquer se trouve sur le chemin optique du faisceau laser.

Au cours d'une étape 508, on détermine la valeur numérique à représenter sur la zone visée, en lisant, en mémoire, cette valeur. Au cours d'une étape 509, on fait tourner l'angle de polarisation du polariseur 106 pour que cet angle soit représentatif de la valeur numérique à représenter.

Au cours d'une étape 510, on effectue au moins un tir en émettant un faisceau laser d'une durée de l'ordre de la femtoseconde et on forme des nanostructures sur la zone visée de l'objet ou du document à marquer.

Préférentiellement, on effectue, pour chaque point à marquer, un seul tir. Préférentiellement, malgré les recouvrements de points, au moins la moitié de la surface de la zone marquée ne reçoit qu'un seul tir laser.

Lorsque chaque point de l'image à marquer peut prendre au moins trois valeurs différentes, au cours de l'étape 510, de marquage, on module la polarisation du faisceau laser selon au moins trois directions, chaque direction de polarisation étant associée à l'une des valeurs de points de ladite image.

Au cours d'une étape 512, on détermine si la dernière zone de l'image à former a été traitée. Si non, au cours d'une étape 514, on passe à la zone suivante à marquer et on retourne à l'étape 506 pour cette nouvelle zone.

Ainsi, on provoque le balayage de la surface 108 de manière synchronisée avec le balayage de l'image fournie par le moyen de commande 100.

Si le résultat de l'étape 512 est positif, au cours d'une étape 515, on effectue le marquage d'une marque d'orientation 405 sur la surface à marquer. Cette marque d'orientation est représentative de l'orientation d'une source de lumière qui permet la lecture de l'information codée.

Puis, au cours d'une étape 516, on déplace l'objet ou document marqué, pour le positionner en regard du moyen de capture d'image 109 et d'une source de lumière orientée de manière à faire apparaître, par diffraction, différentes couleurs dans les différentes zones de l'image. Au cours d'une étape 518, on capture et on mémorise une image de la zone marquée de l'objet ou document. Au cours d'une étape 520, on détermine si la qualité du marquage est suffisante, en comparant les couleurs avec des couleurs normalisées et en comparant les surfaces des zones de l'image à des surfaces normalisées.

Si la qualité est inférieure à un niveau prédéterminé, au cours d'une étape 521, on retire l'objet ou le document de la chaîne de production ou d'impression.

Sinon, au cours d'une étape 522, on détermine des caractéristiques physiques de l'image marquée sur la surface 108, en fonction de l'image électronique fournie par le moyen de capture d'image 109. Par exemple, on détermine la position d'embranchements, ou bifurcations, de lignes sensiblement parallèles de la nanostructure.

Au cours d'une étape 524, à partir de ces caractéristiques physiques, on détermine une signature de l'image.

Au cours d'une étape 526, on met en mémoire, par exemple dans une mémoire distante, d'une part, la signature de l'image et, d'autre part, des informations associées, c'est-à-dire, par exemple, le contenu de l'information représentée par cette image, contenu fourni par le moyen de commande 100. Les informations mémorisées conjointement avec la signature sont, par exemple, un identifiant de l'objet, une date de fabrication, un numéro de lot ou un numéro de série individuel.

On note que la mémoire des signatures et informations associées peut être une base de données accessible à distance, par exemple par l'intermédiaire du réseau Internet.

On note aussi que, dans un mode de réalisation où on marque un moule, la signature est déterminée et mémorisée d'une part pour le moule et, d'autre part, pour chaque objet moulé à partir de ce moule.

Lors de la reconnaissance ultérieure de l'objet ou document que l'on souhaite authentifier, au cours d'une étape 544, on effectue une première capture d'image. Puis, au cours d'une étape 546, on détecte la marque d'orientation 405. Au cours d'une étape 548, on oriente une source de lumière pour respecter l'orientation identifiée avec la marque 405. On note que l'on peut, au cours de l'étape 548, soit déplacer la surface marquée, soit déplacer la source de lumière, soit sélectionner la source de lumière parmi plusieurs sources de lumière fixes qui correspond à l'orientation considérée.

Puis, au cours d'une étape 550, on capture et on mémorise une image de la nanostructure avec un moyen de capture d'image 109 et une source de lumière orientée de manière à faire apparaître, par diffraction, différentes couleurs dans les différentes zones de l'image.

Au cours d'une étape 552, on identifie les couleurs portées par les différentes zones marquées de l'image et on les associe aux valeurs numériques d'un message. On affiche alors ce message, on le transmet à distance et/ou on le transmet à une application informatique. Au cours d'une étape 554, on détermine la quantité d'erreurs du message, par exemple en déterminant la quantité de redondances consommée pour corriger ces erreurs ou par comparaison avec l'image d'origine reconstituée. Puis, au cours d'une étape 556, on détermine si l'objet ou document est un original ou une copie en comparant la quantité d'erreurs à une valeur limite prédéterminée.

Pour identifier l'objet ou document, au cours d'une étape 558, on détermine des caractéristiques physiques aléatoires de l'image marquée sur la surface 108, en fonction de l'image électronique fournie par le moyen de capture d'image 109. Par exemple, on détermine la position d'embranchements de lignes sensiblement parallèles de la nanostructure ou la position et la répartition d'erreurs. Au cours d'une étape 560, à partir de ces caractéristiques physiques, on détermine une signature de l'image.

Au cours d'une étape 562, on fournit cette signature à la mémoire distante et on reçoit, en retour, d'une part, une information de reconnaissance de cette signature, l'absence de reconnaissance pouvant indiquer que l'objet ou document est une copie ou un faux et, d'autre part, en cas de reconnaissance, les informations associées à la signature dans la mémoire distante. Ainsi, par exemple, la position et la répartition des éléments caractéristiques ou des erreurs de moulage est comparée avec celles représentées en mémoire pour identifier l'objet ou document par les autres données mémorisées. On note que cette fonction d'identification est conjointe avec la fonction anti-copie, toute copie d'une pièce moulée ou du moule provoquant l'apparition d'erreurs de copie additionnelles qui sont repérées de la même manière que l'identité de la pièce, par exemple en fonction du nombre total des erreurs dans la marque.

Les informations associées sont affichées et/ou transmises à une application de traitement statistique ou de traçabilité.

On note que, en variante, la relecture de l'information marquée est effectuée via l'orientation de ces nanostructures. Par voie microscopique, les microstructures sont directement détectées à l'aide d'un dispositif optique adapté. Un algorithme d'analyse d'image est alors employé pour déterminer l'orientation moyenne de chacune des nanostructures associées à une zone de l'image.

Ainsi, conformément à un aspect de la présente invention, on réalise une irradiation ultra-brèves d'une surface métallique pour obtenir différents types de nanostructures, ou « ripples » dont les orientations servent au codage d'information. Pour contrôler l'orientation des nanostructures, on pilote la lame de polarisation associée au laser.

Pour récupérer l'information codée, on met en oeuvre la variation colorimétrique que la variation d'orientation des nanostructures provoque sur une lumière dont l'orientation est prédéfinie.

Dans la suite de la description, on considère un système d'acquisition d'images constitué d'un scanner à plat. En effet on peut utiliser le scanner à plat comme un moyen indirect de visualisation macroscopique des nanostructures. Ce système d'acquisition a la particularité intéressante de faire correspondre une couleur spécifique à une orientation de nanostructures. La lumière émise par le scanner est une lumière blanche contenant toutes les longueurs d'ondes. La lumière blanche est envoyée sur les nanostructures qui ont une orientation particulière par rapport à l'axe de l'éclairement, ou angle d'incidence. Si on intègre cette orientation à la formule classique de diffraction dans des réseaux on obtient la formule suivante :
m . λ = d . (sin α X cos θ + sin β)
où λ est la longueur d'onde,
α est l'angle d'incidence de la lumière,
θ est l'angle entre les nanostructures et l'axe d'éclairement et
β est l'angle de retour du faisceau lumineux vers le capteur d'image.

En admettant que l'on est dans la configuration matériel scanner suivante : la valeur fixe de α = 10° de l'angle d'incidence de la lumière du scamer et la valeur fixe de β = 56° de retour du faisceau dans le capteur CCD du scanner, on peut en déduire la valeur de la longueur d'onde perçue par ce capteur en fonction de l'orientation des nanostructures sur le scanner.

Ces valeurs de longueurs d'ondes perçues vont de 450nm (bleu) à 570nm (orange) et correspondent aux couleurs présentes sur les images que l'on obtient avec ce système d'acquisition.

L'effet colorimétrique observé lors de l'acquisition d'image est dû à la diffraction de la lumière du système d'acquisition sur le marquage nanostructures. La diffraction de la lumière sur ces réseaux varie en fonction de leurs qualités et morphologies et dépend des différents paramètres de marquages laser utilisés.

Ainsi, la variation des différents paramètres laser permet la réalisation de différents types de nanostructures de différentes structures (en terme de tailles, pas, forme, régularité ...). Ces différents types de nanostructures forment autant de réseaux différents engendrant à leur tour des phénomènes de diffraction différents. Ainsi, avec le même laser et à conditions d'acquisition identiques, il est possible d'obtenir différents spectres de couleur. Une calibration précise du système de lecture/marquage est nécessaire pour permettre une exploitation des résultats. La figure 6 montre deux exemples de calibrations différentes réalisées avec le même dispositif de marquage/relecture mais des paramètres laser différents.

A gauche, on a représenté, dans un camenbert 602, les teintes obtenues avec un diamètre de faisceau lumineux (« spot ») de 45 µm, une puissance de 25 mW, un recouvrement de 15 µm, 3 passages. A droite, on a représenté, dans un camenbert 604, les teintes obtenues avec un diamètre de faisceau de 20 µm, une puissance de 5 mW, pas de recouvrement, 25 passages. On observe que la répartition des couleurs est plus uniforme dans le deuxième cas, à droite, que dans le premier cas.

On expose, ci-dessous, un calcul de la résolution colorimétrique. Cette résolution est utile pour savoir combien de couleurs sont observables avec un dispositif et avec quelle précision on peut discriminer deux couleurs, c'est-à-dire les distinguer. Pour permettre une analyse précise, une métrique de distance inter-couleur est introduite. Les inventeurs ont déterminé qu'une distance calculée dans un espace colorimétrique adapté, par exemple « TSL » (teinte, saturation, luminance) ou, en anglais, « HSV » (hue, saturation, value) permet d'observer que la luminance et la saturation des couleurs issues de ce type d'acquisition varie très peu contrairement à la teinte.

Préférentiellement, lors de la lecture de l'information, une transformation colorimétrique de la représentation d'un point d'image, exprimé en RVB (rouge, vert, bleu) à la sortie du scanner, en une représentation exprimée en TSL.

La figure 7 représente chacune des couleurs observées pour chacune des orientations de nanostructures d'un échantillon avec l'acquisition par scanner à plat dans le repère colorimétrique TSL. Cette courbe 700, formée d'un ensemble de points discontinus, donne l'évolution de la teinte d'une couleur obtenue lors de l'acquisition par un scanner à plat en fonction de l'orientation des nanostructures sur ce scanner.

Une fois calculée la teinte observée pour chaque orientation de nanostructures marquées sur l'échantillon, une classification hiérarchique ascendante est réalisée afin de déterminer le nombre de couleurs observables et distinguables et avec quel niveau de résolution.

L'objectif de la classification hiérarchique ascendante est de classer les individus ayant un comportement similaire sur un ensemble de variables. Le principe est de créer une partition (« dendrogramme ») en agrégeant deux à deux les individus ou groupes d'individus les plus proches. L'algorithme fournit une hiérarchie de partitions contenant l'historique de la classification.

Cette approche nécessite cependant de se munir d'une métrique adaptée aux individus à classer (distance euclidienne, écart type...). Dans l'exemple reporté sur le tableau ci-dessous, c'est la distance euclidienne qui a été choisie. La difficulté de cette classification réside dans le choix de re-calcul des distances après fusion (lien simple : fusion de deux groupes ayant la plus petite distance entre leurs voisins les plus proches, lien complet : fusion de deux groupes ayant la plus petite distance entre leurs voisins les plus éloignés ; lien moyen de groupe : fusion de deux groupes dont les moyennes de distances entre voisins sont les plus faibles ; distance des centroïdes : fusion de deux groupes ayant la plus petite distance entre leurs barycentres)

Devant la spécificité des individus à étudier (une orientation de nanostructures correspondant à une teinte que l'on ne peut moyenner) c'est le lien des centroïdes qui est utilisé sur 25 teintes issues de 25 orientations de nanostructures différentes variant de 4° sur une échelle de 0° à 100°.

**Distances de fusion des centroïdes**

| | 0 | 1 | 2 | 3 | 4 | 5 | 6 | 7 | 8 | 9 | 16 | 17 | 18 | 34 | 77 |
|---|---|---|---|---|---|---|---|---|---|---|---|---|---|---|---|
| Orientation | teinte | | | | | | | | | | | | | | |
| 8 | 133 | 133 | 131 | 131 | 131 | 131 | 131 | 131 | 131 | 128 | 128 | 128 | 122 | 122 | 70 |
| 0 | 131 | 131 | 131 | 131 | 131 | 131 | 131 | 131 | 131 | 128 | 128 | 128 | 122 | 122 | 70 |
| 4 | 131 | 131 | 131 | 131 | 131 | 131 | 131 | 131 | 131 | 128 | 128 | 128 | 122 | 122 | 70 |
| 12 | 131 | 131 | 131 | 131 | 131 | 131 | 131 | 131 | 131 | 128 | 128 | 128 | 122 | 122 | 70 |
| 16 | 128 | 128 | 128 | 131 | 131 | 131 | 131 | 131 | 131 | 128 | 128 | 128 | 122 | 122 | 70 |
| 20 | 122 | 122 | 122 | 122 | 122 | 122 | 122 | 122 | 122 | 128 | 128 | 128 | 122 | 122 | 70 |
| 24 | 118 | 118 | 118 | 118 | 122 | 122 | 122 | 122 | 122 | 128 | 128 | 128 | 122 | 122 | 70 |
| 28 | 110 | 110 | 110 | 110 | 110 | 110 | 110 | 110 | 110 | 110 | 110 | 110 | 122 | 122 | 70 |
| 32 | 93 | 93 | 93 | 93 | 93 | 93 | 93 | 93 | 93 | 93 | 93 | 110 | 122 | 122 | 70 |
| 36 | 75 | 75 | 75 | 75 | 75 | 70 | 70 | 70 | 70 | 70 | 70 | 70 | 70 | 45 | 70 |
| 40 | 70 | 70 | 70 | 70 | 70 | 70 | 70 | 70 | 70 | 70 | 70 | 70 | 70 | 45 | 70 |
| 44 | 60 | 60 | 60 | 60 | 60 | 60 | 60 | 60 | 52 | 52 | 36 | 36 | 36 | 45 | 70 |
| 48 | 52 | 52 | 52 | 52 | 52 | 52 | 52 | 52 | 52 | 52 | 36 | 36 | 36 | 45 | 70 |
| 52 | 45 | 45 | 45 | 45 | 45 | 45 | 45 | 52 | 52 | 52 | 36 | 36 | 36 | 45 | 70 |
| 56 | 41 | 40 | 40 | 38 | 38 | 38 | 36 | 36 | 36 | 36 | 36 | 36 | 36 | 45 | 70 |
| 60 | 40 | 40 | 40 | 38 | 38 | 38 | 36 | 36 | 36 | 36 | 36 | 36 | 36 | 45 | 70 |
| 64 | 38 | 37 | 37 | 38 | 38 | 38 | 36 | 36 | 36 | 36 | 36 | 36 | 36 | 45 | 70 |
| 68 | 37 | 37 | 37 | 38 | 38 | 38 | 36 | 36 | 36 | 36 | 36 | 36 | 36 | 45 | 70 |
| 72 | 37 | 37 | 37 | 38 | 38 | 38 | 36 | 36 | 36 | 36 | 36 | 36 | 36 | 45 | 70 |
| 80 | 37 | 37 | 37 | 38 | 38 | 38 | 36 | 36 | 36 | 36 | 36 | 36 | 36 | 45 | 70 |
| 92 | 36 | 37 | 37 | 38 | 38 | 38 | 36 | 36 | 36 | 36 | 36 | 36 | 36 | 45 | 70 |
| 76 | 34 | 33 | 33 | 33 | 33 | 33 | 36 | 36 | 36 | 36 | 36 | 36 | 36 | 45 | 70 |
| 88 | 33 | 33 | 33 | 33 | 33 | 33 | 36 | 36 | 36 | 36 | 36 | 36 | 36 | 45 | 70 |
| 96 | 33 | 33 | 33 | 33 | 33 | 33 | 36 | 36 | 36 | 36 | 36 | 36 | 36 | 45 | 70 |
| 84 | 32 | 33 | 33 | 33 | 33 | 33 | 36 | 36 | 36 | 36 | 36 | 36 | 36 | 45 | 70 |
| | 20 | 15 | 14 | 12 | 11 | 10 | 9 | 8 | 7 | 6 | 5 | 4 | 3 | 2 | 1 |

La dernière ligne de ce tableau donne, pour chaque colonne, le nombre de classes discernables.

L'observation de ce dendrogramme permet d'affirmer que l'on est en mesure de pouvoir discerner un maximum de vingt classes d'orientation de nanostructures différentes en termes de teintes associées à l'aide du système d'acquisition d'image utilisé pour réaliser ce dendrogramme. Lorsque la distance de fusion augmente, le nombre de classes que l'on peut discerner diminue.

Ensuite, suivant le nombre de classes que l'on veut utiliser, il suffit de remonter le dendrogramme ci dessus et de choisir les orientations de nanostructures correspondantes.

Ce système permet de déterminer un ensemble de classes maximisant la distinction de leur teinte l'une par rapport à l'autre.

Un exemple d'utilisation de la présente invention est de reproduire une oeuvre graphique sur une surface métallique en utilisant le principe exposé plus haut : une orientation de nanostructures correspondant à une couleur. On observe que plusieurs nanostructures peuvent être superposées en chaque point de l'image.

Pour cela, on caractérise le nombre de couleurs dominantes dans l'oeuvre à reproduire. Ensuite, suivant ce nombre, on utilise le dendrogramme ci dessus pour associer toutes les couleurs de l'oeuvre à la classe de couleur la plus proche proposée.

Le nombre de classes voulues étant déterminé, on répartit chacun des pixels de l'image d'origine dans l'une des classes de teinte proposées. Par exemple, cette opération est réalisée dans le repère colorimétrique RGB. On calcule la distance entre chaque pixel de l'image d'origine à chaque classe de couleur disponible et on associe la couleur du pixel du tableau à celle de la classe de teinte la plus proche. On a ainsi réduit de manière automatique le nombre de couleurs de l'image au nombre de classes de couleur disponibles pour le marquage et visualisable par le scanner.

Cette opération étant réalisée, les plans couleurs correspondant aux orientations de nanostructures à marquer sont créés. Ces plans représentent ce que le laser doit marquer sur l'échantillon de métal pour former chaque orientation de nanostructures associée à la couleur attendue.

Au niveau macroscopique, la lecture de l'information détermine l'orientation des nanostructures grâce à l'effet de diffraction de réseau correctement contrôlé. Ainsi, par la mise en oeuvre de l'invention, on utilise la variation colorimétrique pour ajouter de l'information dans un nouvel axe de lecture d'un code donné. Par exemple, on ajoute à un Datamatrix (marque déposée) de 4 mm de coté, des nanostructures ayant trois orientations différentes) que l'on lit par l'intermédiaire de trois couleurs différentes fournies par un capteur d'image, par exemple un scanner à plat.

## Revendications

1. Procédé de marquage d'une surface, **caractérisé en ce qu'**il comporte :
- une étape (500) de codage d'une information sous forme d'une image comportant des valeurs représentatives de l'information codée,
- une étape (506 à 514) de marquage, point par point, d'une zone de ladite surface avec un faisceau laser polarisé pour former des nanostructures orientées sur ou dans ladite surface, en modulant la polarisation du faisceau laser pour chaque point de marquage en fonction de la valeur d'un point de ladite image,
- une étape (524) de détermination d'une signature représentative de caractéristiques physiques de points de l'image marquée et
- une étape (526) de mémorisation de ladite signature.

2. Procédé selon la revendication 1, **caractérisé en ce que**, au cours de l'étape (506 à 514) de marquage, on marque une zone de référence représentative d'une orientation à mettre en oeuvre au cours d'une étape de lecture dudit marquage.

3. Procédé selon l'une quelconque des revendications 1 ou 2, **caractérisé en ce que**, au cours de l'étape (506 à 514) de marquage, au moins la moitié de la surface de la zone marquée ne reçoit qu'un seul tir laser.

4. Procédé selon l'une quelconque des revendications 1 à 3, **caractérisé en ce que**, au cours de l'étape (500) de codage d'une information sous forme d'une image comportant des valeurs représentatives de l'information codée, chaque point de ladite image peut prendre au moins trois valeurs différentes et au cours de l'étape de marquage, on module la polarisation du faisceau laser selon au moins trois directions, chaque direction de polarisation étant associée à l'une des valeurs de points de ladite image.

5. Procédé selon l'une quelconque des revendications 1 à 4, **caractérisé en ce qu'**il comporte une étape (518) de lecture de ladite image marquée sur ladite surface et une étape (520) de vérification de qualité en fonction de l'image lue.

6. Procédé selon l'une quelconque des revendications 1 à 5, **caractérisé en ce que**, au cours de l'étape (506 à 514) de marquage, on met en oeuvre un faisceau laser émettant une lumière dont la longueur d'onde est proche de 800 nm.

7. Procédé selon l'une quelconque des revendications 1 à 6, **caractérisé en ce que**, au cours de l'étape (500) de codage, on fait varier ladite image pour chacune des étapes de marquage à réaliser.

8. Procédé selon l'une quelconque des revendications 1 à 7, **caractérisé en ce que**, au cours de l'étape (500) de codage, ladite information est représentative de données relatives à un objet ou document (108) comportant ladite surface (301).

9. Procédé selon l'une quelconque des revendications 1 à 8, qui comporte, en outre :
- une étape (550) de capture d'une image électronique de ladite image marquée sur ladite surface ;
- une étape (552) de traitement de la couleur de points de ladite image captée et
- une étape (552) de décodage d'une information en fonction de la couleur des dits points de l'image captée.

10. Procédé selon la revendication 9, **caractérisé en ce que**, au cours de l'étape (550) de capture d'une image électronique, on oriente une source d'éclairage (312) pour éclairer l'image marquée avec une orientation prédéterminée.

11. Procédé selon l'une quelconque des revendications 9 ou 10, **caractérisé en ce qu'**il comporte une étape de lecture d'une marque portée par ladite surface et au cours de l'étape de capture d'une image électronique, on détermine l'orientation de la source d'éclairage par rapport à ladite image marquée en fonction de ladite marque lue.

12. Procédé selon l'une quelconque des revendications 9 à 11, **caractérisé en ce qu'**il comporte une étape de détermination d'authenticité de l'image marquée, en fonction de l'information décodée.

13. Procédé selon l'une quelconque des revendications 9 à 12, **caractérisé en ce qu'**il comporte une étape de détermination d'une signature représentative de points de l'image marquée et une étape de comparaison de ladite signature avec des signatures conservées en mémoire.

14. Dispositif (100 à 107) de marquage d'une surface, **caractérisé en ce qu'**il comporte :
- un moyen (100) de codage d'une information sous forme d'une image,
- un moyen (101 à 107) de marquage de ladite surface avec un faisceau laser polarisé pour former des nanostructures orientées sur ou dans ladite surface, en modulant la polarisation du faisceau laser en fonction de chaque point de ladite image à former sur ladite surface,
- un moyen de détermination d'une signature représentative de caractéristiques physiques de points de l'image marquée et
- un moyen de mémorisation de ladite signature.

15. Dispositif selon la revendication 14, qui comporte, en outre :
- un moyen (309, 313) de capture d'une image électronique de ladite image marquée sur ladite surface ;
- un moyen (305, 310) de traitement de la couleur de points de ladite image captée et
- un moyen (305, 310) de décodage d'une information en fonction de la couleur des dits points de l'image captée.

## Patentansprüche

1. Verfahren zur Markierung einer Oberfläche, **dadurch gekennzeichnet, dass** es folgende Schritte umfasst:
- eine Etappe (500) der Kodierung einer Information in Form eines Bildes, das für die kodierte Information repräsentative Werte enthält,
- eine Etappe (506 bis 514) der Markierung Punkt für Punkt einer Zone der besagten Oberfläche mit einem polarisierten Laserstrahl, um auf oder in die besagte Oberfläche gerichtete Nanostrukturen zu bilden, indem man die Polarisation des Laserstrahls für jeden Markierungspunkt entsprechend dem Wert eines Punktes des Bildes verändert,
- eine Etappe (524) der Bestimmung einer für physische Eigenschaften von Punkten des markierten Bildes repräsentativen Signatur
- eine Etappe (526) der Speicherung der Signatur.

2. Verfahren nach Anspruch 1, **dadurch gekennzeichnet, dass** man im Verlauf der Markierungsetappe (506 bis 514) eine Referenzzone markiert, die für eine im Verlauf der Leseetappe der genannten Markierung auszuführende Orientierung repräsentativ ist.

3. Verfahren nach irgendeinem der Ansprüche 1 oder 2, **dadurch gekennzeichnet, dass** im Verlauf der Markierungsetappe (506 bis 514) mindestens die Hälfte der Oberfläche der markierten Zone nur einen einzigen Laserschuss erhält.

4. Verfahren nach irgendeinem der Ansprüche 1 bis 3, **dadurch gekennzeichnet, dass** im Verlauf der Etappe (500) der Kodierung einer Information in Form eines Bildes, das für die kodierte Information repräsentative Werte enthält, jeder Punkt des Bildes mindestens drei verschiedene Werte annehmen kann und man im Verlauf der Markierungsetappe die Polarisation des Laserstrahls nach mindestens drei Richtungen verändert, wobei jede Polarisationsrichtung mit einem der Punktwerte des genannten Bildes assoziiert ist.

5. Verfahren nach irgendeinem der Ansprüche 1 bis 4, **dadurch gekennzeichnet, dass** es eine Etappe (518) des Einlesens des auf besagter Oberfläche markierten Bildes und eine Etappe (520) der Qualitätsprüfung entsprechend des eingelesenen Bildes enthält.

6. Verfahren nach irgendeinem der Ansprüche 1 bis 5, **dadurch gekennzeichnet, dass** man im Verlauf der Markierungsetappe (506 bis 514) einen Laserstrahl einsetzt, der ein Licht aussendet, dessen Wellenlänge annähernd 800 nm beträgt.

7. Verfahren nach irgendeinem der Ansprüche 1 bis 6, **dadurch gekennzeichnet, dass** man im Verlauf der Kodierungsetappe (500) das besagte Bild für jede der zu verwirklichenden Markierungsetappen variieren lässt.

8. Verfahren nach irgendeinem der Ansprüche 1 bis 7, **dadurch gekennzeichnet, dass** im Verlauf der Kodierungsetappe (500) die besagte Information repräsentativ für Angaben über einen Gegenstand oder ein Dokument (108) ist, welche die besagte Oberfläche (301) enthält.

9. Verfahren nach irgendeinem der Ansprüche 1 bis 8, das unter anderem folgende Etappen umfasst:
- eine Etappe (550), bei der ein elektronisches Bild des auf besagter Oberfläche markierten Bildes aufgenommen wird,
- eine Etappe (552) der Verarbeitung der Punktfarbe des aufgenommenen Bildes und
- eine Etappe (552), bei der je nach Farbe der besagten Punkte des aufgenommenen Bildes eine Information dekodiert wird.

10. Verfahren nach Anspruch 9, **dadurch gekennzeichnet, dass** man im Verlauf der Etappe (550) der Aufnahme eines elektronischen Bildes eine Beleuchtungsquelle (312) ausrichtet, um das markierte Bild mit einer vorbestimmten Ausrichtung zu beleuchten.

11. Verfahren nach irgendeinem der Ansprüche 9 oder 10, **dadurch gekennzeichnet, dass** es eine Etappe enthält, bei der ein sich auf der genannten Oberfläche befindliches Zeichen eingelesen wird, und dass man während der Etappe der Aufnahme eines elektronischen Bildes die Ausrichtung der Lichtquelle in Bezug auf das besagte markierte Bild gemäß dem besagten eingelesenen Zeichen bestimmt.

12. Verfahren nach irgendeinem der Ansprüche 9 bis 11, **dadurch gekennzeichnet, dass** es eine Etappe der Bestimmung der Authentizität des markierten Bildes gemäß der dekodierten Information enthält.

13. Verfahren nach irgendeinem der Ansprüche 9 bis 12, **dadurch gekennzeichnet, dass** es eine Etappe der Bestimmung einer für Punkte des markierten Bildes repräsentativen Signatur und eine Etappe zum Vergleich der genannten Signatur mit bereits im Speicher enthaltenen Signaturen enthält.

14. Vorrichtung (100 bis 107) zur Markierung einer Oberfläche, **dadurch gekennzeichnet, dass** es Folgendes umfasst:
- ein Mittel (100) zum Kodieren einer Information in Form eines Bildes,
- ein Mittel (101 bis 107) zur Markierung der besagten Oberfläche mit einem polarisierten Laserstrahl, um Nanostrukturen zu bilden, die auf oder in die besagte Oberfläche gerichtet sind, indem man die Polarisation des Laserstrahls gemäß jedem Punkt des auf besagter Oberfläche zu erzeugenden Bildes verändert,
- ein Mittel zur Bestimmung einer Signatur, die physische Eigenschaften von Punkten des markierten Bildes repräsentiert
- ein Mittel zur Speicherung der besagten Unterschrift.

15. Vorrichtung nach Anspruch 14, die außerdem folgendes umfasst:
- ein Mittel (309, 313) zur Aufnahme eines elektronischen Bildes des auf besagter Oberfläche markierten Bildes,
- ein Mittel (305, 310) zur Verarbeitung der Punktfarbe des besagten aufgenommenen Bildes und
- ein Mittel (305, 310) zur Dekodierung einer Information gemäß der Farbe der besagten Punkte des aufgenommenen Bildes.

## Claims

1. Method for marking a surface, **characterized in that** it comprises:
- a step (500) of coding information in the form of an image comprising values representative of the coded information,
- a step (506 to 514) of marking, dot by dot, an area of said surface with a polarized laser beam to form oriented nanostructures on or in said surface, by modulating the laser beam's polarization for each marking dot according to the value of a dot of said image,
- a step (524) of determining a signature representative of physical characteristics of dots of the marked image, and
- a step (526) of storing said signature.

2. Method according to claim 1, **characterized in that**, during the marking step (506 to 514), a reference area is marked representing an orientation to be utilized during a step of reading said marking.

3. Method according to any one of claims 1 to 2, **characterized in that**, during the marking step (506 to 514), at least half the surface of the marked area only receives a single laser shot.

4. Method according to any one of claims 1 to 3, **characterized in that**, during the step (500) of coding the information in the form of an image comprising values representative of the coded information, each dot of said image can take at least three different values and, during the marking step, the polarization of the laser beam is modulated according to at least three directions, each polarization direction being associated to one of the values of said image's dots.

5. Method according to any one of claims 1 to 4, **characterized in that** it comprises a step (518) of reading said image marked on said surface and a step (520) of verifying the quality according to the image read.

6. Method according to any one of claims 1 to 5, **characterized in that**, during the marking step (506 to 514), a laser beam is utilized emitting a light with a wavelength close to 800 nm.

7. Method according to any one of claims 1 to 6, **characterized in that**, during the coding step (500), said image is varied for each of the marking steps to be carried out.

8. Method according to any one of claims 1 to 7, **characterized in that**, during the coding step (500), the information is representative of data relating to an object or a document (108) comprising said surface (301).

9. Method according to any one of claims 1 to 8, which also comprises:
- a step (550) of capturing an electronic image of said image marked on said surface;
- a step (552) of processing the color of said captured image's dots and
- a step (552) of decoding the information according to the color of said dots of the captured image.

10. Method according to claim 9, **characterized in that**, during the electronic image capture step (550), a light source (312) is oriented to illuminate the marked image with a predefined orientation.

11. Method according to any one of claims 9 or 10, **characterized in that** it comprises a step of reading a mark carried by said surface and during the step of capturing an electronic image, the orientation of the light source in relation to said marked image is determined according to said mark read.

12. Method according to any one of claims 9 to 11, **characterized in that** it comprises a step of determining the authenticity of the marked image, according to the decoded information.

13. Method according to any one of claims 9 to 12, **characterized in that** it comprises a step of determining a signature representative of dots of the marked image and a step of comparing said signature with signatures stored in memory.

14. Device (100 to 107) for marking a surface, **characterized in that** it comprises:
- a means (100) of coding information in the form of an image,
- a means (101 to 107) of marking said surface with a polarized laser beam to form oriented nanostructures on or in said surface, by modulating the laser beam's polarization according to each dot of said image to be formed on said surface,
- a means of determining a signature representative of physical characteristics of dots of the marked image, and
- a means of storing said signature.

15. Device according to claim 14, which also comprises:
- a means (309, 313) of capturing an electronic image of said image marked on said surface;
- a means (305, 310) of processing the color of said captured image's dots and
- a means (305, 310) of decoding the information according to the color of said dots of the captured image.
